# EUROPÄISCHE PATENTSCHRIFT

(11) **EP 1 439 346 B1**
(45) Veröffentlichungstag und Bekanntmachung des Hinweises auf die Patenterteilung: **17.10.2007**
(21) Anmeldenummer: 04007315.7
(22) Anmeldetag: 13.08.2002
(51) Int. Cl.: F16N 7/32

(54) **Ansatzteil für einen Führungswagen**
Part of guiding device
Elément de guidage

(30) Priorität: 17.08.2001 DE 10139347
(43) Veröffentlichungstag der Anmeldung: 21.07.2004
(62) Teilanmeldung aus: 02767096.7
(73) Patentinhaber: ELHA-MASCHINENBAU LIEMKE KG, D-33161 Hövelhof (DE)
(72) Erfinder: Vullhorst, Franz, 33161 Hövelhof (DE)
(74) Vertreter: Ostermann, Thomas

(56) Entgegenhaltungen:
- EP-A- 0 440 038
- US-A- 5 496 113
- US-A- 5 615 955
- US-A- 6 024 490
- US-B1- 6 250 804

## Beschreibung

Die Erfindung betrifft ein Ansatzteil nach dem Oberbegriff des Patentanspruchs 1.

Aus der DE 40 02 846 C2 ist ein Verfahren zum Schmieren und Kühlen von zerspanenden Werkzeugen mit Schmierstoff-Minimalmengen bekannt, bei dem Schmierstofftropfen einer mit einer Kugelpackung versehenen Kammer zugeführt werden, so dass mittels eines mitreißenden Druckluftstromes ein Zerstäubungseffekt erzielt wird. Die hierbei erzielte Schmierstofftropfengröße liegt im Bereich von >10 µm. Zwar ermöglicht das bekannte Verfahren bzw. die bekannte vorrichtung eine relativ einfache Schmierstoffdosierung, da die Tröpfchengröße im Makrobereich liegt. Der Ausstoß einnes umweltschädigenden Ölnebels, bei dem die Tröpfchengröße des Schmierstoffes noch kleiner ist, wird verhindert. Nachteilig an dem bekannten verfahren ist jedoch, dass der Schmierstoff in zerstäubter Form mit einer relativ kleinen Tropfengröße bereitgestellt wird. Dadurch, dass die Schmierstofftropfen mit relativ großer Geschwindigkeit der Schmierstelle zugeführt werden, ist die Anwendung auf das Schmieren und Kühlen von zerspanendem Werkzeug beschränkt.

Aus der DE 196 17 752 A1 ist ein Verfahren und eine Vorrichtung zum Schmieren von Schmierstellen mit Schmierstoff-Minimalmengen bekannt, bei dem der Schmierstoff in Mikrotropfenform als Bestandteil eines Flüssigkeits-GasGemisches der Schmierstelle zugeführt wird. Dieser Stand der Technik hat somit eine Vernebelungseinrichtung zum Gegenstand, in der der Schmierstoff mit einem gasförmigen Trägermedium zu einem Schmierstoffnebel vermischt ist, der der Schmierstelle zugeführt wird. Nachteilig an dem bekannten Verfahren bzw. der Vorrichtung ist, dass der Schmierstoff in besonders kleiner Tropfengröße - quasi als Nebel - an der Schmierstelle freigegeben wird, was sich hinsichtlich des Aspektes des Umweltschutzes ungünstig auswirkt.

Es sind Ansatzteile für einen auf einer Führungsschiene verschiebbaren Führungswagen bekannt, die seitlich an den Führungswagen angeflanscht sind und die über eine Einlassöffnung, Kanalanordnung und eine Auslassöffnung verfügen, so dass dem Führungswagen Schmierstofftropfen zur Schmierung zugeführt werden können. Die bekannten Ansatzteile sind nicht geeignet, aus einem durch die Einlassöffnung zugeführten Schmierstoffnebel Schmierstofftröpfchen abzutrennen.

Aus der US 5 496 113 A ist ein Ansatzteil für einen auf einer. Führungsschiene einer Lagerführung verschiebbaren Führungswagen bekannt, der einen Grundkörper mit einer Einlassöffnung zur Zuführung eines Schmierstoffes sowie eine Auslassöffnung zur Abgabe des Schmierstoffes aufweist. Zwischen dem Grundkörper des Ansatzteils und der Führungsschiene ist ein Dichtelement angeordnet. Im Unterschied zu dem Erfindungsgegenstand ist keine Trofenabscheidungseinrichtung in dem Grundkörper integriert angeordnet. Eine Tropfenabscheidungseinrichtung ist in dem Grundkörper nicht integriert angeordnet.

Auch aus der US 6 024 490 A und US 6 250 804 A ist ein Ansatzteil für einen auf einer Führungsschiene einer Lagerführung verschiebbaren Führungswagen bekannt, der über einen Grundkörper mit einer Einlassöffnung zur Zuführung eines Schmierstoffs sowie über eine Auslassöffnung zur Abgabe des Schmierstoffs verfügt. Eine Tropfenabscheidungseinrichtung ist in dem Grundkörper nicht integriert angeordnet.

Aufgabe der vorliegenden Erfindung ist es daher, ein Ansatzteil für einen auf einer Führungsschiene eines Maschinenelementes verschiebbaren Führungswagen derart weiterzubilden, dass eine Abscheidung von Schmierstofftröpfchen aus einem Schmierstoffnebel ermöglicht wird.

Zur Lösung dieser Aufgabe weist die Erfindung die Merkmale des Patentanspruchs 1 auf.

Ein Vorteil der Erfindung besteht darin, dass durch das Vorsehen eines Dichtelementes an den Grundkörper eines die Durchleitung des Schmierstoffes ermöglichenden Ansatzteiles ein hohes Maß an Dichtigkeit gegeben ist, so dass der Schmierstoff ausschließlich durch die Auslassöffnung des Grundkörpers abgegeben wird. Erfindungsgemäß weist das Ansatzteil eine Tropfenabscheidungseinrichtung auf, so dass unmittelbar an der Schmierstelle der Schmierstoff in der gewünschten Form und Größe bereitgestellt wird.

Nach einer Weiterbildung des Ansatzteiles ist ein Einsatzelement vorgesehen, das zum einen die Funktion hat, mittels einer mindestens mit einem Düsenkanal versehenen Düsenscheibe eine Querschnittsverengung des Kanals herbeizuführen, durch den der Schmierstoffnebel hindurchgeleitet wird. Zum anderen wird durch die Länge des Einsatzelementes die Größe der sich in Strömungsrichtung an die Düsenscheibe anschließenden Kammer festgelegt, in der sich die Abscheidungsflächen befinden. Durch verwirbelung des Schmierstoffnebels an diesen Abscheidungsflächen erfolgt eine Trennung des Schmierstoffes von dem gasförmigen Trägermedium.

Nach einer Weiterbildung der Erfindung weist das erfindungsgemäße Ansatzteil zwischen einem Grundkörper desselben und dem Führungswagen bzw. einem integrierten Umlenkelement ein Dichtelement auf, das vorzugsweise flexibel ausgebildet ist und eine druckdichte Verbindung des Ansatzteils an den Führungswagen bewirkt, so dass ein unerwünschtes Entweichen des Schmierstoffes verhindert wird.

Ausführungsbeispiele der Erfindung werden nachfolgend anhand der Zeichnungen näher erläutert.

Es zeigen:
- Figur 1: eine schematische Darstellung einer Schmierstellensteuereinrichtung, mittels derer eine Mehrzahl von Schmierstellen an Maschinenbaugruppen mit Schmierstoff versorgt wird,
- Figur 2: eine perspektivische Darstellung einer Wälzlagerführung mit einem auf einer Führungsschiene verschiebbar gelagerten Führungswagen und einem seitlich an dem Führungswagen anzuflanschenden Ansatzteil,

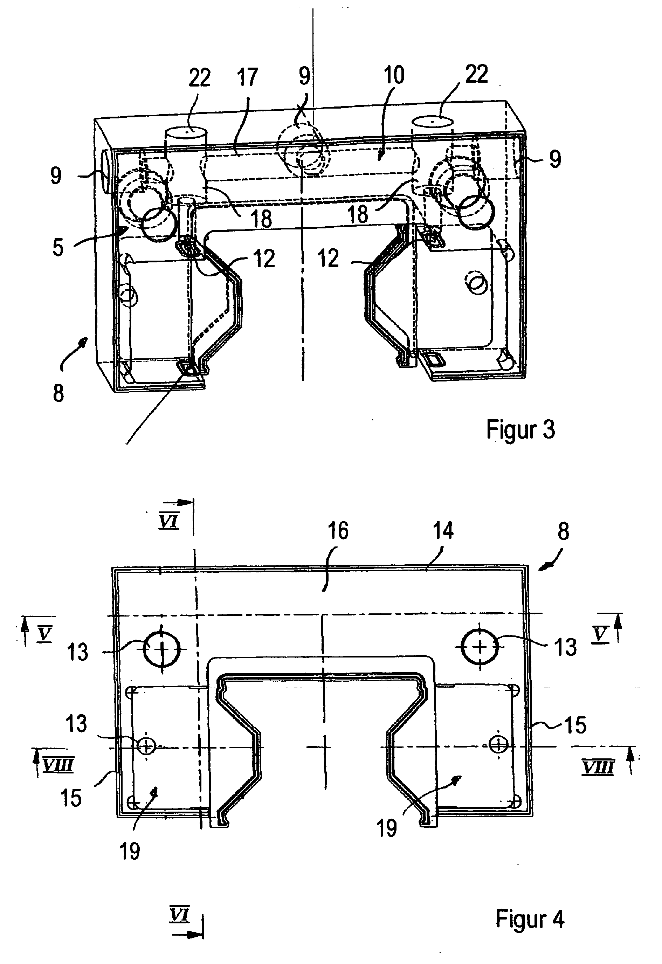

- Figur 3: eine perspektivische Darstellung des Ansatzteils,
- Figur 4: eine Vorderansicht des Ansatzteils,

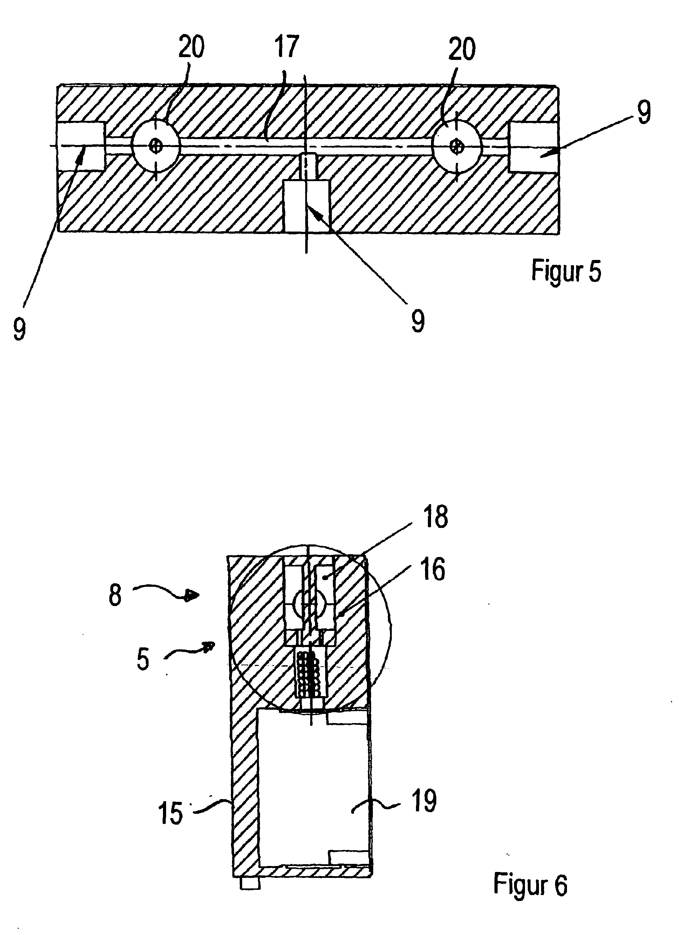

- Figur 5: einen Schnitt durch das Ansatzteil entlang der Linie V-V in Figur 4,
- Figur 6: einen Schnitt durch das Ansatzteil entlang der Linie VI-VI gemäß Figur 4,
- Figur 7: eine vergrößerte Darstellung eines Teilbereiches des Ansatzteils gemäß Figur 6,
- Figur 8: einen Schnitt durch das Ansatzteil entlang der Linie VIII-VIII gemäß Figur 4,
- Figur 9: eine perspektivische Darstellung eines aufgeschnittenen Trennelementes nach einer alternativen Ausführungsform und
- Figur 10: einen Querschnitt durch ein Verbindungselement mit einem eingesetzten Trennelement.

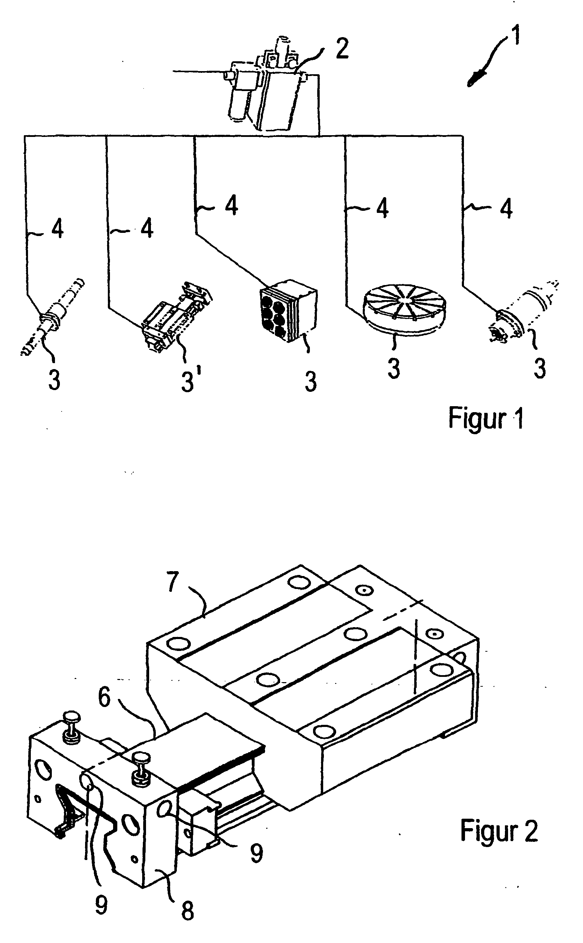

In Figur 1 ist eine Schmierstellensteuereinrichtung 1 dargestellt, die im Wesentlichen aus einer Vernebelungseinrichtung 2, einer Mehrzahl von Schmierstellen 3, 3' sowie die Vernebelungseinrichtung 2 mit den einzelnen Schmierstellen 3, 3' verbindenden Zuführleitungen besteht. Die Vernebelungseinrichtung 2 dient zur Erzeugung eines Schmierstoffnebels, der aus einem Gemisch von gasförmigem Trägermedium, vorzugsweise Luft, und Mikrotropfen des Schmierstoffes gebildet ist. Zu diesem Zweck werden der vernebelungseinrichtung 2 zum einen der Schmierstoff und zum anderen das gasförmige Trägermedium zugeführt. Die Vernebelung kann entsprechend einem in der Druckschrift DE 40 02 846 C2 beschriebenen Verfahren erfolgen. Über die Zuführleitungen 4 wird der Schmierstoffnebel zu den einzelnen Schmierstellen 3, 3' zugeleitet. Zur Einstellung des Schmierstoffnebeldrucks ist im Bereich der Vernebelungseinrichtung 2 und/oder den einzelnen Schmierstellen 3, 3' jeweils ein nicht dargestelltes Druckventil zugeordnet.

Jeder Schmierstelle 3, 3' ist eine Tropfenabscheidungseinrichtung 5 (Trennelement) zugeordnet, deren Funktion beispielhaft für die als Wälzlagerführung ausgebildete Schmierstelle 3' im Folgenden beschrieben wird. Die Zuführleitungen können zu unterschiedlichen Maschinenbaugruppen führen, so dass an den Schmierstellen 3 beispielsweise ein Kugelgewindetrieb, ein Mehrspindelkopf, ein Rundschalttisch oder eine Arbeitsspindel angeordnet sein kann, siehe Symbol in Figur 1 von links nach rechts angeordnet mit Ausnahme der Schmierstelle 3' an der Wälzlagerführung.

Wie deutlicher aus Figur 2 zu ersehen ist, besteht die Wälzlagerführung aus einer Führungsschiene 6, auf der ein Führungswagen 7 verschiebbar angeordnet ist. Seitlich an der Führungsschiene 6 ist ein Ansatzteil 8 angeordnet, das zur Bereitstellung des Schmierstoffs an der Schmierstelle 3' dient. Zu diesem Zweck weist das Ansatzteil 8 eine Einlassöffnung 9 auf, an der ein Ende der Zuführungsleitung 4 angeschlossen ist zur Einleitung des Schmierstoffnebels in das Ansatzteil 8. Weiterhin weist das Ansatzteil 8 eine Kanalanordnung 10 auf, durch die der Schmierstoffnebel geführt wird, insbesondere zu der Tropfenabscheidungseinrichtung 5. Die Tropfenabscheidungseinrichtung 5 bewirkt eine Trennung des Schmierstoffs von dem gasförmigen Trägermedium, so dass der Schmierstoff in Schmierstofftropfenform zusammen mit dem Trägermedium durch mindestens eine Auslassöffnung 12 an die Schmierstelle 3 abgegeben wird. Die Auslassöffnung ist als Schlitz ausgebildet mit einer Breite von ca. 0,6 mm. Alternativ kann der Schlitz auch als eine Mehrzahl von über die Querfläche verteilt angeordnete Bohrungen ausgebildet sein.

Das Ansatzteil 8 weist Befestigungsbohrungen 13 auf, mittels derer das Ansatzteil 8 an den Führungswagen 7 angeschraubt werden kann. Das Ansatzteil 8 besteht aus einem Grundkörper 14, der C-förmig ausgebildet ist und insbesondere auf einer Innenseite von zwei Schenkeln 15 an die Kontur der Führungsschiene 6 angepasst ist. Die Schenkeln 15 sind über ein Basisteil 16 miteinander verbunden. Das Basisteil 16 weist im Wesentlichen die Kanalanordnung 10 auf, wobei nach der vorliegenden Ausführungsform drei Einlassöffnungen 9 vorgesehen sind. Zum einen sind zwei gegenüberliegende Einlassöffnungen 9 an den Stirnseiten des Basisteils 16 angeordnet und zum anderen auf einer dem Führungswagen 7 abgewandten Längsseite des Basisteils 16. Von den Einlassöffnungen 9 erstrecken sich Kanalzuführungen zu einem im Wesentlichen in Längsrichtung des Basisteils 16 erstreckenden Kanal 17, von dem aus im Bereich der Schenkel 15 jeweils ein querverlaufender Querkanal 18 in Richtung der Schenkel 15 verläuft. Die Querkanäle 18 führen zu den jeweils den Schenkeln 15 zugeordneten Auslassöffnungen 12. Die Auslassöffnungen 12 grenzen an jeweils eine Ausnehmung 19 der Schenkel 15 an, die zur Aufnahme jeweils eines nicht dargestellten Umlenkelementes vorgesehen sind. Durch das Umlenkelement wird eine Verzweigung und unmittelbare Zuführung der Schmierstofftropfen zu den Wälzelementen der Wälzlagerführung 3' erzielt.

Die Querkanäle 18 bestehen jeweils aus einem stromaufwärts angeordneten breiten Abschnitt 20 und einem stromabwärts angeordneten schmalen Abschnitt 21. Der breite Abschnitt 20 des Querkanals 18 ist über den Kanal 17 hinaus verlängert bis zu einer Seitenfläche des Grundkörpers 14 ausgebildet, so dass durch eine später verschließbare Einsatzöffnung 22 ein Einsatzelement 23 in den breiten Abschnitt 20 eingesetzt werden kann. Das Einsatzelement 23 besteht aus einem Abstandsbolzen 24, dessen Durchmesser kleiner ist als der Durchmesser des Querkanals 18. An den gegenüberliegenden Enden des Abstandsbolzens 24 sind kolbenartige Scheiben 25, 26 angeordnet. Die auf einer dem schmalen Abschnitt 21 des Querkanals 18 abgewandten Seite des Abstandsbolzens 24 angeordnete Scheibe 25 ist als massive Verschlussscheibe ausgebildet und dient zum Verschließen bzw. Absperren des Querkanals 18 zur Außenseite des Grundkörpers 14 hin. Auf diese Weise wird ein Entweichen des Schmierstoffnebels verhindert.

Die dem schmalen Abschnitt 21 des Querkanals 18 zugewandten Scheibe 26 ist als Düsenscheibe 26 ausgebildet, und weist ein, zwei oder mehrere Durchtrittskanäle 27 auf, die koaxial zu dem Querkanal 18 verlaufen und eine Verbindung schaffen zwischen dem durch die Düsenscheibe 26 getrennten Raum des breiten Abschnitts 20 und den eine Kammer bildenden schmalen Abschnitt 21. Die Düsenscheibe 26 weist einen zu dem Durchmesser des breiten Abschnitts 20 korrespondierenden Durchmesser auf, so dass der Schmierstoffnebel nur durch die Durchtrittskanäle 27 in die Kammer 21 gelangen kann.

Bevor das Einsatzelement 23 in den Querkanal 18 eingesetzt wird, wird der schmale Abschnitt 21 mit einer Mehrzahl von beweglich angeordneten Kugeln 28 gefüllt, die eine Kugelpackung bilden. Die Kammer 21 wird durch die Kugeln 28 vollständig ausgefüllt, wobei die Kugeln 28 aus einer in Strömungsrichtung 29 verlaufenden Reihe von konzentrisch angeordneten Kugelringen 30 gebildet ist. Die Kugelringe 30 sind in einer gemeinsamen Querebene angeordnet, wobei der Abstand der Querebenen benachbarter Kugelreihen im Wesentlichenmit dem Durchmesser der Kugeln 28 übereinstimmt. Der Durchmesser der Kugeln beträgt ca. 1 mm.

Nachdem die Kammer 21 mit den Kugeln 28 gefüllt worden ist, wird das Einsatzelement 23 in den Querkanal 18 eingesetzt, wobei die Verengung des Querkanals 18 am Übergang zwischen dem breiten Abschnitt 20 und dem schmalen Abschnitt 21 einen Anschlag für die Düsenscheibe 26 bildet.

Nachfolgend wird an der Verschlussscheibe 25 eine dichte Verriegelung des Einsatzelementes 23 in dem Querkanal 18 bewirkt.

Die Durchtrittskanäle 27 sind als Durchtrittsdüsen ausgebildet, deren Durchmesser in einem Bereich von 0,5 mm bis 0,8 mm liegen. Im vorliegenden Ausführungsbeispiel weisen die beiden Durchtrittsdüsen einen Durchmesser von 0,7 mm auf.

Die einzelnen Kugeln 28 bilden Abscheidungsflächen, die in Strömungsrichtung 29 durchbrochen sind und an denen eine Benetzung durch die Schmierstoffpartikel erfolgt, die durch die Durchtrittsdüsen 27 als Bestandteil des Schmierstoffnebels in die Kammer 21 eintreten.

Die Bereitstellung von Schmierstofftropfen an der Schmierstelle 3' erfolgt nach folgendem Verfahren. Der in der vernebelungseinrichtung 2 erzeugte Schmierstoffnebel wird durch die Einlassöffnungen 9 in den Kanal 17 unter Druck eingespeist. Der Schmierstoffnebel kann nur durch die Durchtrittsdüsen 27 des Einsatzelementes 23 in die Kammer 21 eindringen, wobei aufgrund der Querschnittsverminderung ein Venturi-Effekt eintritt. Hierdurch wird bereits der Abscheidungsprozess der Schmierstoffpartikel von dem gasförmigen Trägermedium (Druckluft) eingeleitet. Dadurch, dass die Strömung nachfolgend in die mit der Kugelpackung versehenen Kammer 21 eintritt und durchgeleitet wird, wird der Abscheidungsgrad des Schmierstoffes weiter erhöht, so dass an der Auslassöffnung 12 Schmierstofftropfen im mm-Bereich bereitgestellt werden können. Diese Schmierstofftropfen werden zusammen mit der Druckluft abgegeben.

Durch den in der Kammer 21 sich vollziehenden Trennprozess ergibt sich eine Schmierstoff-Rückgewinnung von mindestens 98%. Die Kanäle 17, 18 werden mit einem Strömungsdruck des Schmierstoffnebels bzw. der Druckluftströmung von etwa 0,5 bis 1,5 bar beaufschlagt.

In dem vorliegenden Ausführungsbeispiel dient das in die Ausnehmung 19 eingesetzte Umlenkelement zum Umlenken der Wälzkörper des Druckluftstromes sowie der Schmierstofftropfen zu den unterschiedlichen Teilschmierstellen der Wälzlagerführung. Zu diesem Zweck sind an der Auslassöffnung 12 bzw. in einem Auslassbereich des Umlenkelementes ein umlaufendes Dichtelement 31 vorgesehen.

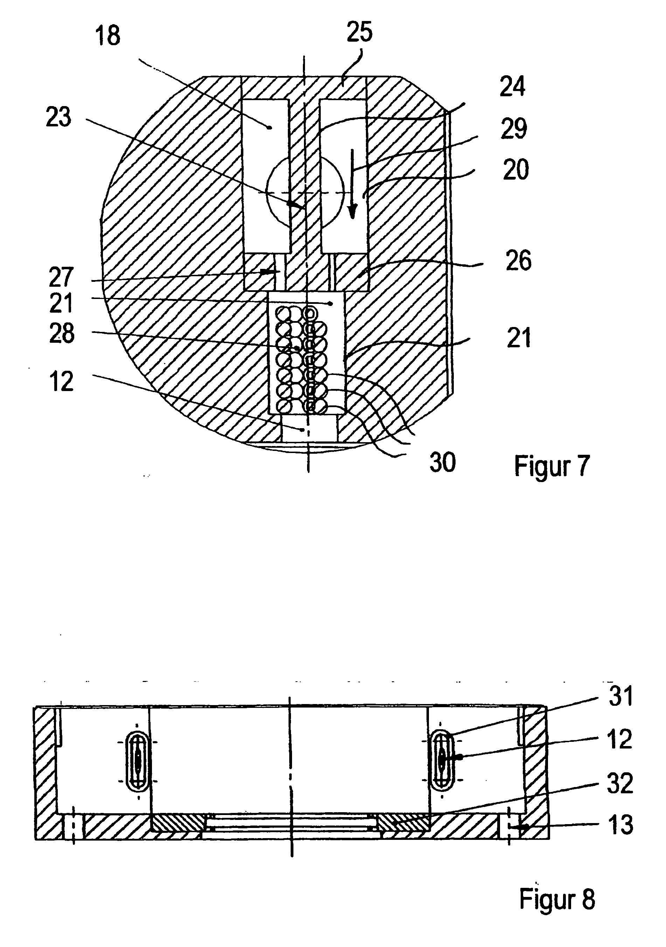

Wie insbesondere aus Figur 8 ersichtlich ist, ist zwischen dem Grundkörper 14 und der Führungsschiene 6 ein Dichtelement 32 angeordnet, das zusammen mit weiteren nicht dargestellten Dichtelementen zu einer hermetischen drucksicheren Abriegelung der Luft und des Öls führt.

Nach einer alternativen Ausführungsform der Dichtelemente 31, 32, können diese auch an einer Innenwandung des Grundkörpers 14 angespritzt sein.

Nach einer alternativen Ausführungsform kann ein Trennelement 50 mit einer Kugelpackung vorgesehen sein und in die Kammer 21 einsteckbar ausgebildet sein. Die Dimension des Trennelementes 50 kann an die Dimension der Kammer 21 angepasst sein. Durch die Ausbildung eines so ausgebildeten hohlzylinderförmigen Trennelementes 50 kann die Montage wesentlich vereinfacht werden.

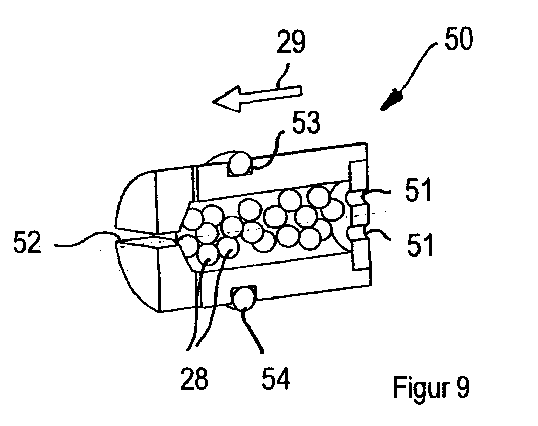

Wie aus Figur 9 zu ersehen ist, ist das Trennelement 50 (Schmierpatrone) als Hohlzylinder ausgebildet, wobei sie an einer in Strömungsrichtung hinten liegenden Stirnseite zwei kreisförmige Durchtrittskanäle 51 zum Eintritt des Schmierstoffnebels aufweist. Der Durchmesser der beiden Durchtrittskanäle 51 ist auf die Größe der innerhalb des Trennelementes 50 gepackten Kugeln 28 abgestimmt, so dass keine Kugel 28 den Innenraum des Hohlzylinders verlassen kann. Der Durchmesser der Durchtrittskanäle 51 kann in einem Bereich von 0,5 bis 0,8 mm liegen und ist damit kleiner als der Durchmesser der Kugeln 28. Der in Strömungsrichtung 29 vorne liegende Auslass ist als kreuzschlitzförmiger Auslass 52 ausgebildet, wobei die Breite des Schlitzes kleiner ist als der Durchmesser der Kugeln 28. Die Breite der X-förmig oder senkrecht zueinander stehenden Schlitze, die in einem Mittelpunkt zusammentreffen, kann in einem Bereich von 0,4 bis 0,65 mm liegen. Vorteilhaft erstreckt sich der Schlitz über die gesamte Breite des hohlzylinderförmigen Trennelementes 50, wobei die Hauptaustrittsfläche in der Mitte auf der Längsachse des Trennelementes 50 angeordnet ist. Die Gesamtaustrittsfläche dieses kreuzförmigen Schlitzes ist größer als die Gesamteintrittsfläche der Durchtrittskanäle 51. Hierdurch wird ein zu hoher Strömungsstau vermieden, der zu einer unerwünschten Zerstäubung der in diesem Bereich bereits von der Druckluft getrennten Schmierstofftropfen führen würde. Wesentlich ist, dass die Länge der Schlitze größer als der doppelte Durchmesser der Kugeln 28 ist, so dass ein weitgehendes Verschließen des Auslasses 52 durch die Kugeln 28 verhindert wird.

Zur vereinfachten Montage des Trennelementes 50 weist diese eine Umfangsnut 53 auf, in der ein O-Ring 54 angeordnet ist, so dass der O-Ring 54 etwas von der Mantelfläche des Trennelementes 50 abragt. Hierdurch ist auf einfache Weise ein dichter Sitz des Trennelementes 50 in der Kammer 21 gewährleistet. Der Durchmesser des Trennelementes 50 ist auf den Innendurchmesser der Kammer 21 abgestimmt, so dass das Trennelement 50 passgenau in derselben angeordnet ist, insbesondere durch Presssitz. Dadurch, dass sich in dem breiten Abschnitt 20 das Einsatzelement 23 anschließt, ist das Trennelement 50 in der Kammer 21 sicher gehalten.

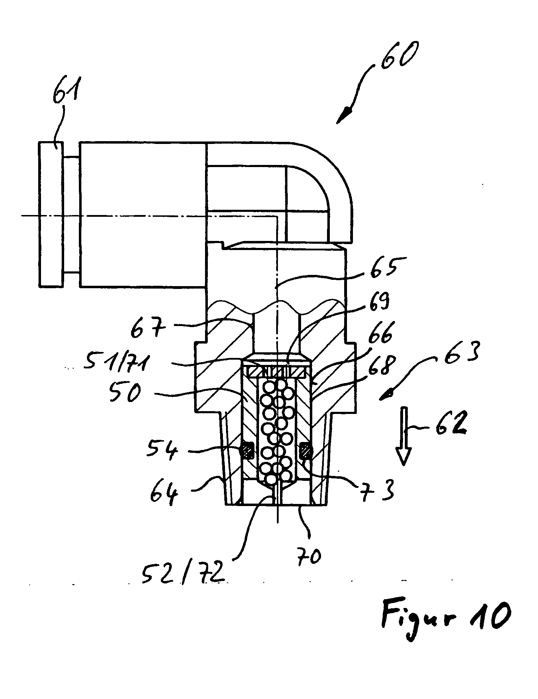

In Figur 10 ist ein Verbindungselement 60 dargestellt, das zur lösbaren Verbindung der oben dargestellten und den Schmierstoffnebel transportierenden Zuführleitung 4 mit einem Gehäuse an der Schmierstelle 3, 3' dient. Im Unterschied zu dem oben beschriebenen Ansatzteil 8 ist das Verbindungselement 60 flexibel und vielseitig einsetzbar, da es über einen ersten Verbindungsanschluss 61 mit handelsüblichen pneumatischen oder hydraulischen Zuführleitungen 4 verbindbar ist. Der erste Verbindungsanschluss 61 ist vorzugsweise als handelsüblicher Steckanschluss ausgebildet, der mit einer pneumatischen Zuführleitung 4 verbunden ist.

Alternativ kann der Verbindungsanschluss 61 auch als Schraubanschluss ausgebildet sein, der mit einer hydraulischen Zuführleitung 4 verbindbar ist.

Auf einer in Strömungsrichtung Pfeil 62 vorne liegenden Seite des Verbindungselementes 60 ist ein zweiter Verbindungsanschluss 63 als Schraubanschluss angeordnet zur Verbindung des Verbindungselementes 60 mit einem nicht dargestellten Gehäuse der Schmierstelle 3, 3'. Der zweite Verbindungsanschluss 63 weist ein Außengewinde 64 auf, mittels dessen das Verbindungselement 60 kraftschlüssig mit einem nicht dargestellten Innengewinde des Gehäuses verbindbar ist. Die Symmetrieachse 65 des zweiten Verbindungsanschlusses 63 bzw. des Außengewindes 64 ist vorzugsweise in radialer Richtung zu dem hohlzylinderförmigen Gehäuse der Schmierstelle orientiert. Das Gehäuse kann beispielsweise ein Teil eines Kugelgewindetriebs, einer Arbeitsspindel, eines Rundschalttisches, von Welslagerführungen, von Mehrspindelköpfen oder dergleichen ausgebildet sein. Dabei weist das Außengewinde 64 eine solche Tiefe auf, dass das freie Ende des zweiten Verbindungsanschlusses 63 unmittelbar an die Schmierstelle 3, 3' reicht.

In der vorliegenden Ausführungsform gemäß Figur 10 ist das Verbindungselement 60 winkelförmig ausgebildet. Alternativ kann das Verbindungselement 60 auch gerade oder schief ausgebildet sein.

Das Verbindungselement 60 weist im Bereich des zweiten Verbindungsanschlusses 63 einen Hohlraum 66 zur Aufnahme eines Einsatzelementes 50 bzw. einer Schmierpatrone 50 auf. Der Hohlraum 66 ist verbreitert im Vergleich zu dem durch den übrigen Bereich des Verbindungselementes 60 angeordneten Kanal 67 zur Durchführung des Schmierstoffnebels ausgebildet.

Das Einsatzelement 50 bildet im Wesentlichen die Tropfenabscheidungseinrichtung 5. Zu diesem Zweck weist das Einsatzelement 50 eine hohlzylinderförmige Kammer auf, in der eine Mehrzahl von durchbrochenen Abscheidungsflächen 28 angeordnet sind. Das Einsatzelement 50 gemäß Figur 10 entspricht dem Einsatzelement gemäß Figur 9 und weist im Wesentlichenkreisförmige Mantelflächen 68 auf, die endseitig zum einen von einer senkrecht zur Strömungsrichtung 62 und in Strömungsrichtung 62 hinten angeordneten Stirnfläche 69 und zum anderen von einer in senkrecht zur Strömungsrichtung 62 und in Strömungsrichtung 62 vorne angeordneten Auslassfläche 70 begrenzt ist. Die Stirnfläche 69 weist zwei Durchtrittsöffnungen 71 auf, durch die der Schmierstoffnebel in die Kammer eintritt. Die Auslassfläche 70 weist kreuzförmig angeordnete zwei Auslassschlitze 72 auf, die jeweils durchgehend und geradlinig zwischen gegenüberliegenden Bereichen der Mantelfläche 68 verlaufen. Die in Strömungsrichtung 22 verlaufende Erstreckung der Auslassschlitze 72 ist mindestens so lang wie die Länge der Durchtrittsöffnung 51, vorzugsweise länger.

Die Auslassschlitze 72 sind um diese vorgegebene Tiefe in die Mantelflächen 68 eingeschnitten. Die Auslassfläche 70 schließt in der montierten Position vorzugsweise bündig mit dem freien Ende des zweiten verbindungsanschlusses 62 ab.

Die Breite des Auslassschlitzes 72 kann den Durchmesser der Durchtrittsöffnungen 71 entsprechen, beispielsweise 0,5 mm. Die Länge des Einsatzelementes 50 kann beispielsweise 12 mm betragen.

Zur Montage des Einsatzelementes 50 in den dem zweiten Verbindungsanschluss 63 zugeordneten Hohlraum des Verbindungselementes 60 weist das Einsatzelement 50 einen O-Ring 54 auf, der in einer Außenringnut 73 der Mantelfläche 68 gelagert ist. Das Einsatzelement 50 ist nach verpressendem Einsetzen in den Hohlraum des Verbindungselementes 60 formschlüssig, sicher und dicht mit dem Verbindungselement 60 verbunden.

Vorteilhaft kann somit das Einsatzelement 50 in ein Verbindungselement 60 integriert werden, so dass das Verbindungselement einen kompakten Aufbau hat. Es weist eine Doppelfunktion auf. Zum einen dient es zum Verbinden der Zuführleitung 4 des Schmierstoffes mit einem Gehäuse der Schmierstelle. Zum anderen erfolgt in dem Verbindungselement 60 die Umwandlung des Schmierstoffnebels in für die Schmierung erforderliche Schmiertropfen.

Alternativ kann das Einsatzelement 50 unabhängig von dem Verbindungselement 60 unmittelbar in einem Gehäuse an der Schmierstelle 3, 3' angeordnet sein. Wesentlich ist, dass das Einsatzelement 50 derart in dem Gehäuse integriert ist, dass die Auslassfläche 70 unmittelbar an der Schmierstelle 3, 3' angeordnet ist.

## Patentansprüche

1. Ansatzteil für einen auf einer Führungsschiene (6) einer Lagerführung verschiebbaren Führungswangen (7), mit mindestens einer Einlassöffnung (9) zur Zuführung eines Schmierstoffs, mit mindestens einer Auslassöffnung (12) zur Abgabe des Schmierstoffs an ein in einem Grundkörper (14) des Ansatzteils einsetzbares Umlenkelement, mit einer Kanalanordnung bestehend aus mindestens einem Kanal zur Durchleitung des Schmierstoffs zwischen der Einlassöffnung und der Auslassöffnung (12), dass zwischen dem Grundkörper (14) des Ansatzteils und der Führungsschiene (6) ein Dichtelement (32) angeordnet ist, **dadurch gekennzeichnet, dass** in dem Grundkörper (14) eine Tropfenabscheidungseinrichtung (5, 50) integriert ist, derart, dass der Einlassöffnung (9) ein Schmierstoffnebel zuführbar ist, der in der Tropfenabscheidungseinrichtung (5, 50) aufgetrennt wird in Schmierstofftropfen und einem gasförmigen Medium, wobei der Schmierstofftropfen und das gasförmige Medium zusammen durch die Auslassöffnung (12, 52) an die Schmierstelle (3, 3') abgegeben werden.

2. Ansatzteil nach Anspruch 1, **dadurch gekennzeichnet, dass** das Dichtelement (31, 32) an einer Innenwandung des Grundkörpers (14) angespritzt ist.

3. Ansatzteil nach Anspruch 1 oder 2, **dadurch gekennzeichnet, dass** ein Einsatzelement (23) in einen Kanal (18) einsetzbar ist, wobei das Einsatzelement (23) mindestens einen Durchtrittskanal (27) aufweist, und dass dem Durchtrittskanal (27) eine Kammer (21) enthaltend eine Mehrzahl von Abscheidungsflächen (28) nachgeordnet ist.

4. Ansatzteil nach einem der Ansprüche 1 bis 3, **dadurch gekennzeichnet, dass** das Einsatzelement (23) passgenau in den Kanal (18) und/oder in die Kammer (20) einsetzbar und festlegbar ist.

5. Ansatzteil nach einem der Ansprüche 1 bis 4, **dadurch gekennzeichnet, dass** das Einsatzelement (23) einen Abstandsbolzen (24) aufweist, dessen Durchmesser kleiner ist als der Durchmesser des Kanals (18), und dass sich auf einer der Kammer (21) zugewandten Seite des Abstandsbolzens (24) eine den Durchtrittskanal enthaltende Düsenscheibe (26) anschließt, deren Durchmesser zu dem Durchmesser des Kanals (18) korrespondiert.

6. Ansatzteil nach Anspruch 1 oder 2, **dadurch gekennzeichnet, dass** die Tropfenabscheidungseinrichtung (5) durch ein Trennelement (50) gebildet ist, das als ein Hohlzylinder ausgebildet ist mit einer Mehrzahl von integrierten Abscheidungsflächen (28).

7. Ansatzteil nach Anspruch 6, **dadurch gekennzeichnet, dass** das Trennelement (50) an einer in Strömungsrichtung (29) hinten liegenden Stirnseite zwei kreisförmige Durchtrittskanäle (51) zum Eintritt des Schmierstoffnebels und einen in Strömungsrichtung (29) vorne liegenden kreuzschlitzförmigen Auslass (52) aufweist.

8. Ansatzteil nach einem der Ansprüche 1 bis 7, **dadurch gekennzeichnet, dass** zwischen einem Grundkörper (14) des Ansatzteils (8) und dem Führungswagen (7) und/oder dem Grundkörper (14) und dem in dem Grundkörper (14) einsetzbaren Umlenkelement zur Umlenkung der Wälzelemente und/oder dem Grundkörper (14) und der Führungsschiene (6) Dichtelemente (31, 32) angeordnet sind, die den Austritt des druckbeaufschlagten gasförmigen Mediums sowie den Austritt des Schmierstoffes verhindern.

## Claims

1. Part of guiding device for a guide carriage 7 shiftable on a guide rail (6) of a bearing guide comprising at least one inlet opening (9) for lubricant feed, at least one outlet opening (12) for giving out said lubricant to a deflector element adapted to be inserted into a base body (14) of the guiding device part, a port system consisting of at least one port for lubricant to be passed between the inlet opening (9) and the outlet opening (12), and a sealing element (32) disposed between the base body (14) of the guiding device part and the guide rail (6), **characterized by** the fact that a drop separator means (5, 50) is integrated in said base body (14) such as to enable a lubricant mist to be fed to said inlet opening (9) and to be separated into lubricant drops and a gaseous medium in said drop separator means (5, 50), wherein the lubricant drop and the gaseous medium are jointly discharged across said outlet opening (12, 52) and to a lube point (3, 3').

2. Part of guiding device according to Claim 1, **characterized by** the fact that the sealing element (31, 32) is injection molded to an inner wall of the base body (14).

3. Part of guiding device according to Claim 1 or 2, **characterized by** the fact that an insert element (23) is insertable into a port (18), wherein said insert element (23) comprises at least one passageway (27) having a chamber (21) with a plurality of downstream separator faces (28).

4. Part of guiding device according to any of the preceding Claims 1 to 3, **characterized by** the fact that said insert element (23) can be precision fitted into said port (18) and/or the chamber (20) and fixed in place therein.

5. Part of guiding device according to any of the preceding Claims 1 to 4, **characterized by** the fact that said insert element (23) is provided with a spacer bolt (24) having a diameter smaller than that of said port (18) and that a nozzle disk (26) comprising said passageway is adjacently disposed on a side of the of the spacer bolt (26) which faces the chamber (21), the diameter of said nozzle disk corresponding to the diameter of said port (18).

6. Part of guiding device according to Claim or 2, **characterized by** the fact that the drop separator means (5) is constituted of a separator element (50) in the form of a hollow cylinder having a plurality of integrated separator faces (28).

7. Part of guiding device according to Claim 6, **characterized by** that fact that the separator element (50) comprises two circular passageways (51) on rear face end as viewed in flow direction (29) to take in the lubricant mist and a cross-slit type outlet (52) on a forward face end as viewed in flow direction (29) for discharging said mist.

8. Part of guiding device according to any of the preceding Claims 1 to 7, **characterized by** the fact that sealing elements (31, 32) are arranged between a base body (14) of the guiding device part (8) and the guide carriage (7) and/or between the base body 14 and the deflector element insertable into said base body (14) for deflecting rolling elements and/or between the base body (14) and the guide rail (6) wherein said sealing elements inhibit a discharge of a pressurized gaseous medium as well as of the lubricant.

## Revendications

1. Elément de guidage pour un chariot de guidage (7) pouvant être déplacé sur un rail de guidage (6) d'un mécanisme de guidage, avec au moins une ouverture d'entrée (9) pour l'introduction d'un lubrifiant, avec au moins une ouverture de sortie (12) pour la distribution du lubrifiant à un élément déflecteur, pouvant être inséré dans un corps de base (14) de l'élément de guidage, avec un agencement de canaux consistant au moins un canal pour le passage du lubrifiant entre ouvertures d'entrée et l'ouverture de sortie (12), un élément d'étanchéité (32) étant agencé entre le corps de base (14) de l'élément de guidage et le rail de guidage (6),
**caractérisé en ce que**,
dans le corps de base (14) est intégré un système de séparation de gouttes (5, 50) de sorte qu'à l'ouverture d'entrée (9) puisse est conduit un brouillard de lubrifiant qui, dans le système de séparation de gouttes (5, 50), est divisé en gouttes de lubrifiant et en agent porteur gazeux, les gouttes de lubrifiant et l'agent porteur gazeux étant délivrés au point de graissage (3, 3') par l'ouverture de sortie (12, 52).

2. Elément de guidage selon la revendication 1, **caractérisé en ce que** l'élément d'étanchéité (31, 32) est injecté sur une paroi intérieure du corps de base (14).

3. Elément de guidage selon revendication 1 ou 2, **caractérisé en ce qu'**un élément insérable (23) peut être mis en place dans un canal (18), que l'élément insérable (23) présente au moins un canal de passage (27), et qu'au canal de passage (27) est associée, en aval, une chambre (21) comprenant plusieurs surfaces de séparation (28).

4. Elément de guidage selon l'une des revendications 1 à 3, **caractérisé en ce que** l'élément insérable (23) peut être inséré et fixé, précisément ajusté, dans le canal (18) et / ou dans la chambre (20).

5. Elément de guidage selon l'une des revendications 1 à 4, **caractérisé en ce que** l'élément insérable (23) présente un boulon d'écartement (24) dont le diamètre est plus petit que le diamètre du canal (18), et que, sur le côté du boulon d'écartement (24) orientée vers la chambre (21), est raccordée une plaque d'injection (26) qui contient le canal de passage et dont le diamètre correspond au diamètre du canal (18).

6. Elément de guidage selon revendication 1 ou 2, **caractérisé en ce que** le pare-goutte (5) est formé par un élément de séparation (50) qui est réalisé en tant que cylindre creux, avec plusieurs surfaces de séparation (28) intégrées.

7. Elément de guidage selon la revendication 6, **caractérisé en ce que** l'élément de séparation (50) présente, sur une surface frontale, située en arrière dans la direction d'écoulement (29), deux canaux de passage circulaires (51) pour l'admission du brouillard de lubrifiant, et une sortie (52) en forme de fente cruciforme située en avant dans la direction d'écoulement (29).

8. Elément de guidage selon l'une des revendications 1 à 7, **caractérisé en ce que** sont agencés, entre un corps de base (14) de l'élément de guidage (8) et le chariot de guidage de guidage (7), et / ou le corps de base (14) et l'élément déflecteur insérable dans le corps de base (14) pour le renvoi des éléments de roulement et / ou entre le corps de base (14) et le rail de guidage (6), des éléments d'étanchéité (31, 32) qui empêchent la sortie de l'agent gazeux soumis à une pression, ainsi que la sortie du lubrifiant.
